# EUROPEAN PATENT APPLICATION

(11) **EP 2 489 441 A1**
(43) Date of publication of application: **22.08.2012**
(21) Application number: 11155271.7
(22) Date of filing: 21.02.2011
(51) Int. Cl.: B05D 7/00, B05D 7/14, C09D 5/44

(54) **Multi-layer coating films**

(71) Applicant: Cytec Austria GmbH, 8402 Werndorf (AT)
(72) Inventor: Schipfer, Rudolf, Dr., 8010 Graz (AT); Feola, Roland, Dr., 8045 Graz (AT); Kuttler, Ulrike, Dr., 8302 Vasoldsberg (AT)
(74) Representative: Deckers, Hellmuth Alexander

(57) **Abstract**

The invention relates to a process for the preparation of a multi-layer coating film on an electrically conductive substrate, comprising the steps of electrodepositing on an electrically conductive substrate, a first coating composition to form an uncured electrodeposition coating film, applying an aqueous primer-surfacer coating composition to form an uncured intermediate coating film, and then simultaneously heating the substrate coated with the said coating films and curing both the uncured electrodeposition coating film and the uncured intermediate coating film to form a cured film, wherein the curing agent **B** is a capped isocyanate where the capping agents are selected from the group consisting of aliphatic linear or branched diols, hydroxyalkyl(meth)acrylates and >NH functional heterocyclic aliphatic or aromatic compounds, to coating films made by this process, and to substrates covered with such coating films.

## Description

This invention relates to a wet-on-wet process for producing multi-layered coating films on electrically conductive substrates, and to a multi-layer coating produced by this process.

Wet-on-wet processes for producing multilayered coating films on electrically conductive substrates have been known, in which a cathodically depositable coating composition is deposited on the said substrate in the first step, at least one further coating composition is applied onto the coating film of the first step, and where in the last step, the coating film of the first step and the at least one film of the further coating composition are jointly cured.

In the Japanese patent JP 1 248 535 C, a method is described for coating an electroconductive metal substrate with a coating layer having excellent appearance by a two-coat one-bake process using a cationic electro-deposition coating composition as an undercoating. This coating composition comprises an epoxy-amine adduct binder and a capped polyfunctional isocyanate crosslinking agent as undercoat, and an aqueous coating material comprising a neutralised polyester binder, a melamine-formaldehyde resin crosslinking agent, and pigments. The importance of the careful choice of the capping agent for properties such as stone chipping resistance and corrosion has not been realised.

In the U. S. Patent 4,375,498 A, a wet-on-wet process is described which uses a cationic electro-deposition coating composition for the first coating, and aqueous or conventional coating materials based on resins containing epoxide groups for the second coating.

In WO 2001/064 523, a wet-on-wet process for the preparation of a multilayered coating film has been disclosed, where a cathodically depositable coating composition is used which is made by polymerising at least one olefinically unsaturated monomer in a dispersion comprising a dissolve or emulsified protonised epoxide-amine adduct. The epoxide amine adduct is made by reacting at least one glycidyl ether of a polyhydric phenol, having, on average, at least one epoxide group per molecule, at least one polyglycidyl ether of a polyol which has, on average, more than one epoxide group per molecule, and at least one compound containing a primary amino group in its molecule.

A disadvantage of all of these processes is that there is apparently a lack of sufficient interlayer adhesion which leads to unsatisfactory results particularly regarding the stone-chip resistance.

It is therefore an object of the present invention to find a novel combination of coating compositions which allows to apply a multi-layer coating onto a substrate in a wet-on-wet process which overcomes this problem.

The invention therefore provides a combination of a first coating composition **C1** which can be applied to a substrate by electrodeposition, and a second coating composition **C2** which is applied onto the substrate coated with the first coating composition **C1** without a separate heating or stoving step or other curing-inducing step between application of the first and the second coating composition.

The invention also provides a process for the preparation of a multi-layer coating, particularly for automotive applications, wherein a first coating composition **C1** is applied to a substrate by electrodeposition, and a second coating composition **C2** is applied onto the substrate coated with the first coating composition **C1**, without a heating step or other curing-inducing step in between. These two layers are then cured in one common curing step involving heating to a temperature in excess of ambient temperature, ambient temperature meaning 20 °C, and in excess of 20 °C meaning at least 21 °C.

The invention also relates to a method of forming a multilayer coating on a substrate, and subjecting the substrate with at least two layers of coating compositions to a common curing step.

### Detailed Description of the Preferred Embodiments

In one embodiment, the invention provides a process for the preparation of a multi-layer coating film on an electrically conductive substrate, comprising the steps of
- electrodepositing on an electrically conductive substrate, of cationically charged resin particles from a first coating composition **C1** in the form of an aqueous dispersion comprising a resinous binder **A** having functional groups selected from the group consisting of hydroxyl groups, amino groups, mercaptane groups, and phosphine groups, a curing agent **B**, and a catalyst **D**, to form an uncured electrodeposition coating film **E**,
- applying an aqueous primer-surfacer coating composition **C2** comprising a coating binder **F** and a curing agent **G** onto the electrodeposition coating film **E** to form an uncured intermediate coating film **H**, and then
- simultaneously heating the substrate coated with coating films **E** and **H** and curing both the uncured electrodeposition coating film and the uncured intermediate coating film to form a cured film **I**.

Curing is preferably effected by heating the substrate covered with the coating films **E** and **H** to a temperature between 120 °C and 190 °C for a period of time between five minutes and sixty minutes.

Usually, a third coating composition **C3** is applied onto the cured film **I**, when providing automobiles such as passenger cars, or trucks, or buses or other land or sea vehicles or vessels, with a protective coating. This is effected by applying a pigmented coating composition **C3** onto the cured film **I** to form an uncured pigmented film **J**, and eventually heating the substrate covered with the cured film **I** and the uncured pigmented film **J**, and curing the pigmented coating film **J** to form a multilayer film **K**.

Curing is preferably effected by heating the substrate covered with cured film **I** and the uncured coating film **J** to a temperature of between 110 °C and 185 °C, for a period of time of between five minutes and sixty minutes. It is also preferred to use a lower curing temperature in curing the uncured coating film J than for curing the coating films **E** and **H**.

The first coating composition **C1** comprises a resinous polymeric binder **A** that can be applied to a substrate by electrodeposition, particularly on a metallic or otherwise electrically conductive substrate that is used as a cathode, i. e. connected to the negative pole of a source of electricity.

The designations "resinous" and "polymeric" as an adjective, as well as "resin" as a noun, are used interchangeably in cases where reference is made to an organic compound having a molar mass of at least 300 g/mol. A polymer has, for the purpose of this invention, at least five repeat units of the same chemical composition.

Preferably, the polymeric binder **A** has cationic groups or cationogenic groups, i. e. groups that can form cations in an aqueous medium by addition of a proton. These latter binders are preferably those having amino groups that can be protonated to form the corresponding ammonium groups, and also those that have sulphide or phosphine groups that can be protonated to form the corresponding sulphonium or phosphonium groups. A particularly preferred group of group of binders are polymeric binders **A** selected from the group consisting of aminofunctional (meth)acrylic resins, aminofunctional polyurethane resins, aminofunctional resins derived from polybutadiene, aminofunctional epoxy resins which are reaction products of functional epoxy resins and amines, and aminofunctional polyurethane carbonate resins which are reaction products of cyclocarbonate resins and amines. The polymeric binder **A** also has further functional groups that are involved in the curing reaction to form a crosslinked polymeric network, preferably a group selected from the group consisting of hydroxyl groups, amino groups, mercaptane groups, and phosphine groups. Most preferred are functional hydroxyl groups.

In a preferred embodiment, the polymeric binder **A** has amino groups which may be primary, secondary, or tertiary, or combinations thereof. The presence of tertiary amino groups is preferred. Good dispersibility and stability is achieved for a binder **A** having amino groups, preferably tertiary amino groups, with an amine number of from 20 mg/g to 150 mg/g, especially preferably from 50 mg/g to 100 mg/g.

The polymeric binder **A** contains functional groups that are reactive with isocyanate-functional compounds under formation of addition products such as urethanes, ureas, thioureas, or alkylaminocarbonylphosphines, such as primary amino groups, secondary amino groups, mercaptan groups and phosphine groups and, in particular, hydroxyl groups. Combinations of these groups may be present in the same CED binder, but preferably there are no primary or secondary amino groups in addition to the hydroxyl groups. The proportion of said functional groups in the polymeric binder **A** corresponds to a specific content of active hydrogen atoms n(H) / m(A), which is the ratio of the amount of substance n(H) of active hydrogen atoms to the mass m(A) of the polymeric binder **A**, of from 0.5 mol/kg to 6 mol/kg, and preferably, from 0.8 mol/kg to 5.5 mol/kg, which active hydrogen atoms may stem from any of the functional groups reactive with isocyanate groups as mentioned supra. The specific content of hydroxyl groups *n*(OH) / *m*(A), where n(OH) is the amount of substance of hydroxyl groups, and *m*(A) is the mass of the polymeric binder **A**, is typically in the range of, for example, 0.5 mol/kg to 5 mol/kg, in particular 0.8 mol/kg to 4.5 mol/kg. The polymeric binder **A** is preferably dispersed in water after quaternisation to the onium form or neutralisation of at least a part of the basic groups present therein.

The weight average molar mass *M*_{w} of the polymeric binder **A**, as determined by gel permeation chromatography of solutions of the non-protonated binder **A** in tetrahydrofuran on common polystyrene-divinylbenzene gel columns, using polystyrene standards for calibration, is preferably from 300 g/mol to 40000 g/mol. In general, their weight average molar weights is less than 100 000 g/mol, preferably less than 75 000 g/mol, and more preferably less than 50 000 g/mol in order to achieve high flowability.

The polymeric binder **A** is usually dispersed in an aqueous medium to prepare a coating composition therefrom. Acids are added to facilitate forming of aqueous dispersions and to stabilise these. Monobasic acids such as nitric acid, lactic acid, formic acid, acetic acid, and methane sulphonic acid are preferred. These acids also provide the protons needed to form the onium forms of the polymeric binder **A**.

Preferred polymeric binders **A** have amine salt groups or quaternary ammonium salt groups, which are preferably acid solubilised reaction products of multifunctional epoxide resins and primary amines, secondary amines, tertiary amines and mixtures thereof, "multifunctional" meaning having more than one functional groups. These cationic polymeric binders **A** are present preferably in combination with the specific blocked polyisocyanate curing agents as further described infra. The polyisocyanate can be present as a fully blocked polyisocyanate or the polyisocyanate can be partially blocked and reacted into the amine salt polymer backbone.

The multifunctional epoxides which are used for the reaction products of epoxides and amines in a preferred embodiment of this invention are polymers having an average number of 1,2-epoxide groups per molecule of greater than one and preferably about two, that is, epoxides which have on an average basis two epoxide groups per molecule. Preferred multifunctional epoxides are glycidyl ethers of cyclic polyols, having more than one hydroxyl group which has been reacted to form a glycidyl ether.

Particularly preferred are glycidyl ethers of polyhydric phenols such as bisphenol A. "Polyhydric" means an alcohol or phenol that has more than one hydroxyl group. These multifunctional epoxides can be produced by etherification of polyhydric phenols with epihalohydrin or dihalohydrin such as epichlorohydrin or dichlorohydrin in the presence of alkali. Examples of polyhydric phenols are 2,2-bis(4-hydroxyphenyl)propane, 1,1-bis-(4-hydroxyphenyl)ethane, 2-methyl-1,1-bis-(4-hydroxyphenyl)propane, 2,2-bis-(4-hydroxy-3-tertiary butylphenyl)propane, bis-(2-hydroxynaphthyl)methane, and 1,5-dihydroxy-3-naphthalene.

Besides polyhydric phenols, other cyclic polyols can be used in preparing the polyglycidyl ethers of cyclic polyol derivatives. Examples of other cyclic polyols would be alicyclic polyols, particularly cycloaliphatic polyols, such as 1,2-cyclohexanediol, 1,4-cyclohexanediol, 1,2-bis(hydroxymethyl)cyclohexane, 1,3-bis(hydroxymethyl)-cyclohexane and hydrogenated bisphenol A.

The multifunctional epoxides have a molar mass of at least 200 g/mol, and preferably within the range of 200 g/mol to 2 kg/mol, and more preferably from 340 g/mol to 2 kg/mol.

The multifunctional epoxides are preferably chain extended with a polyether or a polyester polyol which increases the rupture voltage of the composition and enhances flow and coalescence. Examples of polyether polyols and conditions for such chain extension are disclosed in the US patent 4,468,307, column 2, line 67, to column 4, line 52. Examples of polyester polyols for chain extension are disclosed in US patent 4,148,772, column 4, line 42, to column 5, line 53.

The multifunctional epoxide is reacted with a cationic group former, for example, an amine and acid. The amine can be a primary, secondary or tertiary amine and mixtures thereof. The preferred amines are monoamines, particularly hydroxyl-containing amines. Although monoamines are preferred, polyamines having more than one amino group per molecule, such as ethylene diamine, diethylene triamine, triethylene tetramine, N-(2-aminoethyl)-ethanolamine and piperazine can be used in minor amounts, i. e. preferably in a mass fraction of up to 5 % of the mass of all amines used. Tertiary and secondary amines are preferred to primary amines because the primary amines are polyfunctional with regard to reaction to epoxide groups and have a greater tendency to gel the reaction mixture. When using polyamines or primary amines, special precautions should be taken to avoid gelation. For example, excess amine can be used and the excess can be removed by distillation under reduced pressure at the completion of the reaction. Also, the polyepoxide resin can be added to the amine to insure that excess amine will be present.

Examples of hydroxyl-containing amines are alkanolamines, dialkanolamines, trialkanolamines, alkylalkanolamines, arylalkanolamines and arylalkylalkanolamines containing from 2 to 18 carbon atoms in the alkanol, alkyl and aryl chains. Specific examples include ethanolamine, N-methylethanolamine, diethanolamine, N-phenylethanolamine, N,N-dimethylethanolamine, N-methyldiethanolamine and triethanolamine. Amines which do not contain hydroxyl groups such as mono-, di- and tri-alkyl amines and mixed alkylaryl amines and substituted amines in which the substituents are other than hydroxyl and in which the substituents do not detrimentally affect the epoxide-amine reaction can also be used. Specific examples of such amines are ethylamine, propylamine, methylethylamine, diethylamine, N,N-dimethylcyclohexylamine, triethylamine, N-benzyldimethylamine, dimethylcocoamine and dimethyltallowamine. Also, amines such as hydrazine and propylene imine can be used. Ammonia can also be used and is considered for the purposes of this application to be an amine. Mixtures of the various amines described above can be used. The reaction of the primary and/or secondary amine with the multifunctional epoxide resin takes place upon mixing the amine with the product. The reaction can be conducted neat, or, optionally in the presence of suitable solvent. Reaction may be exothermic and cooling may be desired. However, heating to a moderate temperature, that is, within the range of 50 °C to 150 °C, may be used to accelerate the reaction.

The reaction product of the primary or secondary amine with the multifunctional epoxide resin obtains its cationic character by at least partial neutralisation with acid. Examples of suitable acids include organic and inorganic acids such as formic acid, acetic acid, lactic acid, methane sulphonic acid, nitric acid, phosphoric acid, and carbonic acid. The extent of neutralisation will depend upon the particular product involved. It is only necessary that sufficient acid be used to disperse the product in water. Typically, the amount of acid used will be sufficient to provide at least 30 % of the total theoretical neutralisation. Excess acid beyond that required for 100 % theoretical neutralisation can also be used.

In the reaction of the tertiary amine with the multifunctional epoxide resin, the tertiary amine can be pre-reacted with the acid such as those mentioned above to form the amine salt and the salt reacted with the multifunctional epoxide to form the quaternary ammonium salt group-containing resin. The reaction is conducted by mixing the amine salt and the multifunctional epoxide resin together in the presence of water. Typically, the mass of water employed amounts to a mass ratio with regard to the mass of solids in the reaction mixture, of from 1.75 % to 20 %.

Alternately, the tertiary amine can be reacted with the multifunctional epoxide resin in the presence of water to form a quaternary ammonium hydroxide group-containing polymer which, if desired, may be subsequently acidified. The quaternary ammonium hydroxide-containing polymers can also be used without acid, although their use is not preferred.

In forming the quaternary ammonium base group-containing polymers present in the binder A, the reaction temperature can be varied between the lowest temperature at which reaction reasonably proceeds, for example, room temperature, or in the usual case, slightly above room temperature, i. e. from 25 °C to a maximum temperature of 100°C. At greater than atmospheric pressure, higher reaction temperatures can also be used.

Preferably, the reaction temperature ranges between 60 °C and 100 °C. It is not usually necessary to employ a solvent for the reaction, although a solvent such as a sterically hindered ester, ether or sterically hindered ketone may be used if desired.

In addition to the primary, secondary and tertiary amines disclosed above, a portion of the amine which is reacted with the polyepoxide-polyether polyol product can be the ketimine of a polyamine. This is described in US patent 4,104,147 in column 6, line 23, to column 7, line 23. The ketimine groups will decompose upon dispersing the amine-epoxy reaction product in water resulting in free primary amine groups which would be reactive with curing agents which are described in more detail below.

The extent of cationic group formation of the polymeric binder **A** should be selected that when the resin is mixed with aqueous medium, a stable dispersion will form. A stable dispersion is one which does not settle or is one which is easily redispersible if some sedimentation occurs. In addition, the dispersion should be of sufficient cationic character that the dispersed resin particles will migrate towards the cathode when an electrical potential is applied between an anode and a cathode immersed in the aqueous dispersion.

The polymeric binder **A** of the invention preferably contains a specific amount of substance of amine groups from 0.1 mol/kg to 3.0 mol/kg, particularly preferably from 0.3 mol/kg to 2.0 mol/kg, with relation of the mass of solids in the binder.

Further constituents of the first coating composition are water, the acids needed for neutralisation, curing agents **B** that react with the polymeric binder **A** to form a crosslinked network, and also, pigments, fillers, additives, particularly additives that reduce surface defects, anti-foaming agents, antisettling agents, wetting agents, thickeners and other rheology additives, and catalysts **D** to promote the crosslinking reaction.

The curing agents for the polymeric binder **A** are capped multifunctional isocyanates **B** which split off the capping agent **B2** at the curing temperature to restore the multifunctional isocyanate **B1** which then reacts with the active hydrogen atom of the isocyanate-reactive groups as listed supra, viz. primary amino groups, secondary amino groups, mercaptan groups and phosphine groups and, in particular, hydroxyl groups, to form the crosslinked structure. It is also possible to use unblocked multifunctional isocyanates **B0** as crosslinkers in this case. Such isocyanates may preferably be oligomeric isocyanates such as biurets, allophanates, and isocyanurates, derived from at least difunctional isocyanates **B1** which may also be hydrophilically modified.

The capped multifunctional isocyanates **B** are made by reacting isocyanates **B1** that are at least difunctional, with capping agents **B2**. In this reaction the isocyanate group is converted to a urethane group by an addition reaction of the isocyanate **B1** and the capping agent **B2**. This addition reaction is reversible, and upon heating, optionally in the presence of a catalyst, the isocyanate function is regenerated, and the capping agent, due to its higher volatility, escapes from the cured coating film during the curing reaction.

When capped isocyanates **B** are used, it has been found unexpectedly that depending on the choice of the blocking or capping agent **B2**, the interlayer adhesion is improved as proven by the better performance in the stone chip test. A group of capping agents **B2** has been identified that lead to good interface adhesion between the CED layer and the primer/surface layer when these are cured without intermediate curing step for the CED layer alone. For other capping agents **B2**', the interlayer adhesion is not sufficient as evidenced by the stone chip test.

The group **B2** comprises aliphatic linear or branched diols of the formula I 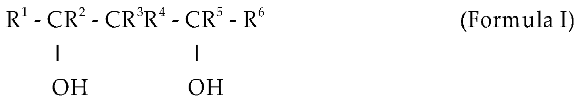 where R¹, R², R³, R⁴, R⁵, and R⁶ are each independently is selected from the group consisting of hydrogen, linear or branched alkyl groups having from one to six carbon atoms, and where R³ and R⁴ may also independently selected from the group consisting of alkoxy groups having from one to six carbon atoms, as well as
aliphatic linear or branched diols of formula II having two hydroxyl groups, which may preferably be both primary, or one primary and one secondary, and less preferred, two secondary, or one primary and one tertiary, or one secondary and one tertiary, or two tertiary, and having from two to ten carbon atoms,

HO -(CR⁷R⁸ - CR⁹R¹⁰ - O)ₙ - H (Formula II)

where n can be 1, 2, 3, or 4, and where R⁷, R⁸, R⁹, and R¹⁰ are each independently is selected from the group consisting of hydrogen, linear or branched alkyl groups having from one to six carbon atoms, and of alkoxy groups having from one to six carbon atoms, and further,
hydroxyalkyl(meth)acrylates of formula III

CH₂ = CR¹¹ - CO - O - R¹² - OH (Formula III)

where R¹¹ is selected from the group consisting of hydrogen, and methyl, and R¹² is an alkylene group selected from the group consisting of 1,2-ethane-diyl, 1,2-propane-diyl, 1,3-propane-diyl, and 1,4-butane-diyl,
and still further, >NH functional heterocyclic aliphatic or aromatic compounds as group IV having from four to twelve carbon atoms, where the ring carbon atoms may additionally be substituted with alkyl groups having from one to four carbon atoms.

By "(meth)acrylate", both acrylates and methacrylates, alternatively and collectively, are meant.

Particularly preferred are ethylene glycol, neopentyl glycol, 1,2-propane diol, 1,3-propanediol, 2-ethyl-propanediol-1,3, 2-methyl-propanediol-1,3, 1,2-butanediol, diethylene glycol, triethylene glycol, and tetraethylene glycol, 2-methyl-pentanediol-2,4, (2-hydroxyethyl) acrylate, (2-hydroxyethyl) methacrylate, (2-hydroxypropyl)acrylate, (2-hydroxypropyl)methacrylate, (2-hydroxypropyl)acrylate, (2-hydroxypropyl) methacrylate, (3-hydroxypropyl) acrylate, (3-hydroxypropyl) methacrylate, (2-hydroxy-2-methylethyl) acrylate, (2-hydroxy-2-methylethyl) methacrylate, (4-hydroxybutyl) acrylate, (4-hydroxybutyl)methacrylate, gamma-butyrolactam, delta-valerolactam, epsilon-caprolactam, omega-laurinlactam, and 3,5-dimethylpyrazole.

It has been found that capping agents **B2**' which do not obey the formulae supra, such as monoethers of the glycols of formula II, as well as aliphatic linear or branched monoalcohols, and aliphatic linear or branched oximes, are not useful in the context of the present invention.

It is possible to use further capping agents in combination with the capping agents of group **B2**, but it has been found for such mixtures that a mass fraction of at least 20 % of one or more capping agents **B2** according to one of formulae I, II and III, or of group IV, is needed to be present in a mixture of capping agents **B2**".

The multifunctional isocyanates **B1** have an average of at least two isocyanate groups per molecule, and may be aliphatic, aromatic, or mixed aromatic-aliphatic. These isocyanates are preferably diisocyanates selected from the group consisting of hexamethylene diisocyanate ("HDI"), 1,6-diisocyanato-2,2,4-trimethylhexane, 1,6-diisocyanato-2,4,4-trimethylhexane, isophorone diisocyanate ("IPDI"), the commercially available mixture of isomeric diisocyanato toluene ("TDI"), alpha, alpha, alpha', alpha'-diisocyanato-m-xylene ("TMXDI"), bis-(4-isocyanatophenyl)methane ("MDI"), and bis-(4-isocyanatocyclohexyl)methane ("HMDI"), and also preferred, trimeric diisocyanatohexane, mixtures of oligomeric bis-(4-isocyanatophenyl)methane, and reaction products of any of the difunctional isocyanates mentioned supra with hydroxyfunctional carbamates which are adducts of cyclic carbonates and at least one aminofunctional compound selected from the group consisting of alkanolamines, dialkanolamines, and aliphatic amines having at least one, and preferably up to four, primary or secondary amino groups.

The catalysts **D** which are preferably used for the invention are compounds of elements of groups 4, 7, 8, 9, 12, 13, 14, and 15 of the fourth, fifth and sixth period of the periodic system of elements, according to New IUPAC Nomenclature, particularly preferably, of the elements Ti, Mn, Fe, Co, Ni, Zn, Cd, Ge, Sn, Pb, Sb, and Bi. Preferred are compounds that are well soluble in water, such as salts of these elements that dissociate into ions, in an aqueous system, and chelate compounds of these elements, where the chelate former may be an organic hydroxy acid such as lactic acid, 2,2-bishydroxymethyl propionic acid, an aminoacid such as N,N,N',N'-ethylenediamine tetraacetic acid, nitrilotriacetic acid, and beta-alanine, or a multifunctional amine or a hydroxyamine. Other useful compounds are organometallic compounds such as alkoxy metal oxides, and metal salt of organic acids or hydroxy acids. Particularly preferred are the methane sulphonates, lactates and bishydroxymethyl-propionates of bismuth, tin, lead, and titanium.

The second coating composition **C2** is a water-borne primer-surfacer coating composition which is preferably based on binders **F** selected from the group consisting of a fatty acid-modified water-borne polyester **F1**, a polyurethane dispersion **F2**, and of mixtures of these. Particularly preferred are primer-surfacer coating compositions that further comprise condensation products **F12** of acid-functional polyurethane dispersions, and hydroxy-functional waterborne polyesters which are obtainable by heating these constituents under esterification conditions, i. e. such conditions where water can be removed by distillation, preferably by azeotropic distillation. This coating compositions generally also comprises pigments, preferably inorganic pigments, and also optionally, wetting agents, flow additives, coalescing agents, and UV absorbers. They further comprise crosslinking agents **G**, preferably such crosslinking agents that are activated by heat such as capped isocyanates or aminoplast resin crosslinkers.

It has been noted in the experiments underlying the present invention that the chemical nature of the binder **F** for the primer-surfacer coating composition has little or no influence on the interlayer adhesion, and the largest influence was surprisingly due to the proper choice of capping agents for the capped isocyanate curing agent used for the CED coating composition.

Curing agents **G** for the binder **F** are preferably thermally activated curing agents that react with the hydroxyl groups present in the binder **F**. Such curing agents **G** are capped isocyanates as described supra, and preferably, curing agents based on amino resins, i. e. addition resins made from aldehydes and polyfunctional amines and/or amides which are preferably etherified with linear or branched aliphatic alcohols preferably having from one to four carbon atoms such as methanol, ethanol, propanol, n-butanol or isobutanol. As examples, methylated or butylated melamine-formaldehyde resins may be used, and also, etherified resins based on linear or cyclic ureas and higher aldehydes which may also be multifunctional, such as glyoxal and glutaric dialdehyde, optionally also in mixture with monoaldehydes such as formaldehyde or propionaldehyde.

These coating compositions are applied, according to the invention, in a way that after the CED coating composition **C1** has been applied, usually in a dip bath, the coated substrate is removed from the bath, rinsed with water, flashed off by, e. g., an air blade, and then coated with the primer-surfacer coating composition **C2** by spraying or with a roller coater or blade coater to form a film **H** on the CED film **E**. The two coatings are then cured together by heating, i. e. there is no separate curing step needed after depositing the CED coating composition **C1** on the substrate. The curing temperature is preferably in the range of from 130 °C to 180 °C. The film formed by concurrent curing is referred to as film **I**.

Preferably, a third coating layer (a topcoat **C3**) is always applied onto the cured coating layer **I** in the examples, and cured in an additional step to form a cured film **J**. The multilayer film obtained after this second curing step is referred to as film **K**. Stone chip resistance was used as a test for good interlayer adhesion in the film **K**. Good interlayer adhesion is seen when both the cured CED layer and the cured primer-surfacer layer either remain undestroyed, or are together removed from the substrate, in other words, if the interlayer adhesion within cured film **I** is higher than the adhesion between cured film **I** and another neighbouring layer. Bad interlayer adhesion is seen if there are many instances where the primer-surfacer layer has been removed by the impact of the stone, while the CED layer has remained fixed to the substrate. Of course, good stone chip impact results are obtained if onyl a very small number of failures are noted on the surface.

This third coating composition **C3** may be solvent-borne or water-borne, and comprises a combination of a binder resins which are preferably based on polyesters or on acrylic resins, and a curing agent therefor which may also be selected from the group consisting of curing agents as listed under item **G** supra. Coating composition **C3** usually also comprises pigments, fillers, and additives such as wetting agents or antisettling agents or sag-control agents.

Surprisingly, also the corrosion properties of base metal substrates coated with the multi-layer coating film according to the invention have been improved.

The invention is further illustrated by the following examples which are not meant to be limiting.

In these examples, as well as in the description, the following conventions have been used:
All concentrations (strengths) and ratios stated in "%" are mass fractions (ratio of the mass *m*_{B} of a specific substance B, divided by the mass *m* of the mixture, in the case of a concentration, or by the mass *m*_{D} of the second substance D, in the case of a ratio).

The acid number is defined, according to DIN EN ISO 3682 (DIN 53 402), as the ratio of that mass *m*_{KOH} of potassium hydroxide which is needed to neutralise the sample under examination, and the mass *m*_{B} of this sample, or the mass of the solids in the sample in the case of a solution or dispersion; its customary unit is "mg/g".

The hydroxyl number is defined according to DIN EN ISO 4629 (DIN 53 240) as the ratio of the mass of potassium hydroxide *m*_{KOH} having the same number of hydroxyl groups as the sample, and the mass *m*_{B} of that sample (mass of solids in the sample for solutions or dispersions); the customary unit is "mg/g". *n* is the symbol for the physical quantity "amount of substance" with the SI unit "mol".

The amine number is defined, according to DIN 53 176, as the ratio of that mass *m*_{KOH} of potassium hydroxide that consumes the same amount of acid for neutralisation as the sample under consideration, and the mass *m*_{B} of that sample, or the mass of solid matter in the sample in the case of solutions or dispersions, the commonly used unit is "mg/g".

### Example 1 - Resin 1

2572 g of an epoxy resin based on bisphenol A, having a number average molar mass of 380 g/mol, 440 g of a polycaprolactone diol having a number average molar mass of 550 g/mol, 661 g of bisphenol A, and 1734 g of methoxypropanol were sequentially filled into a resin kettle, and heated under stirring to 43 °C. The mixture was stirred for further thirty minutes, and then cooled to 41 °C. At this temperature, 221 g of diethanolamine and then, 194 g of dimethylaminopropylamine, were added, whereupon the temperature rose to a maximum of 125 °C under cooling. After continuing the reaction for two more hours under stirring at 125 °C, the dynamic viscosity of a sample drawn and diluted to a mass fraction of 40 % with methoxypropanol, measured at 23 °C and a shear rate of 25 s⁻¹ was 765 mPa·s. The reaction mass was then cooled to 120°C.

### Example 2 - Resin 2

In a separate step, an adduct was made by reacting 760 g of an epoxy resin based on bisphenol A diglycidyl ether having a number average molar mass of 380 g/mol, and 420 g of a poly(oxypropylene) glycol having a number average molar mass of 420 g/mol in the presence of 2 g of benzylamine trifluoroboron as catalyst.
1900 g of an epoxy resin based on bisphenol A, having a number average molar mass of 380 g/mol, 1182 g of the adduct made in the first step, 638 g of bisphenol A, and 1789 g of methoxypropanol were sequentially filled into a resin kettle, and heated under stirring to 45°C. The mixture was stirred for further thirty minutes, and at this temperature, 221 g of diethanolamine and then, 204 g of dimethylaminopropylamine, were added, whereupon the temperature rose to a maximum of 125 °C under cooling. After continuing the reaction for two more hours under stirring at 125 °C, the dynamic viscosity of a sample drawn and diluted to a mass fraction of 40 % with methoxypropanol, measured at 23 °C and a shear rate of 25 s⁻¹, was 700 mPa·s. The reaction mass was then cooled to 120 °C.

### Example 3 - Resin 4

In a separate reaction, an adduct was prepared 68.7 g of diethylene triamine, 516.7 g of ®Cardura E10 (a mixture of glycidyl esters of highly alpha-branched decanoic acids isomers, obtained from Huntsman Chemical), and 126.6 g of an epoxy resin based on bisphenol A diglycidyl ether having a number average molar mass of 380 g/mol, and dissolved in 178 g of methoxypropanol.
1292 g of an epoxy resin based on bisphenol A diglycidylether, having a number average molar mass of 380 g/mol, 274 g of bisphenol A, and 424.8 g of methoxypropanol were added in sequence, and heated under stirring to 100°C, and stirred thirty further minutes after reaching this temperature. A mixture of 0.4 g of dimethylaminopropylamine and 10 g of methoxypropanol were added whereupon the mixture was heated to 120 °C. Stirring was continued at this temperature until the specific amount of substance of epoxide groups *n*(EP)/*m*, calculated as the amount of substance *n*(EP) of epoxide groups divided by the mass *m*(mixture) of the reaction mixture, was 2.25 mol/kg. After reaching this value, the reaction mass was cooled to 112 °C, and 890 g of the adduct solution of the first step were added. The temperature dropped thereby to 95 °C. At 95 °C, 189 g of diethanolamine were added which caused a moderate rise in temperature up to 103°C. After stirring the reaction mass for thirty minutes at this temperature, a mixture consisting of 86.9 g of N,N-dimethylamino propylamine and 49.5 g of methoxypropanol were added which led to a rise in temperature to 120 °C; this temperature was then maintained by appropriate cooling. After sixty minutes of stirring, the specific amount of substance of epoxide groups *n*(EP)/*m* was 1.7 mol/kg. The dynamic viscosity, measured at 23 °C and a shear rate of 25 s⁻¹, on a 43.3 % strength solution of the reaction mixture in methoxypropanol, was 575 mPa·s. 95 g of an epoxy resin based on bisphenol A diglycidyl ether, having a number average molar mass of 380 g/mol, were then added, and the mixture was stirred for one hour at 120 °C. The mass was then cooled to room temperature (20 °C).

### Example 4 - Curing Agent 1

65 g of hydroxyethyl methacrylate, 114 g of 1,2-propylene glycol, 23 g of methyl isobutyl ketone, 2 g of butyl-hydroxytoluene (2,6-di-tert.-butyl-4-methylphenol), and 1 g of hydroquinone were added into a resin kettle, and heated to 60 °C under stirring until a clear solution was obtained. Then, 250 g of a commercially available mixture of monomeric and oligomeric diphenylmethane diisocyanate ("MDI") having a mass fraction of oligomers of 30 % and a viscosity, measured at 20 °C according to DIN EN ISO 3219, of 50 mPa·s were added at 60 °C under exclusion of humidity, cooling and strong stirring. Addition was effected in a way that the temperature of the reaction mass through the exothermic reaction did not exceed 80 °C. After ending the addition of MDI, stirring was continued until the mass fraction of isocyanate groups had dropped below 0.1 % on a sample drawn from the reaction mass, calculated as -N=C=O, molar mass 42.02 g/mol. The mixture was then cooled to room temperature (23 °C), and diluted by addition of 41 g of methoxypropanol and 121 g of ®Texanol (2,2,4-trimethyl-1,3-pentanediol monoisobutyrate, Eastman Chemical Co.).

### Example 5 - Curing Agent 3

456 g of 1,2-propylene glycol were charged into a reaction vessel and heated to 60 °C. 500 g of MDI were added at 60 °C under cooling, strong stirring and exclusion of humidity. Addition was effected in a way that the temperature of the reaction mass did not exceed 85 °C. After ending the addition of MDI oligomer, stirring was continued until the mass fraction of isocyanate groups had dropped below 0.1 % on a sample drawn from the reaction mass, calculated as -N=C=O, molar mass 42.02 g/mol. The mixture was then cooled to room temperature (20 °C), and diluted by addition of 114.4 g of methoxypropanol.

### Example 6 - Curing Agent 4

In a separate reaction step, an adduct was made from 102.1 g of propylene carbonate and 105.1 g of diethanolamine by reacting at 120 °C for three hours.
732.9 g of tetramethyl xylylene diisocyanate and 207.2 g of the adduct made in the first step were charged into a reaction vessel. The mixture was heated under stirring to a temperature of 130 °C. and stirred at that temperature until a mass fraction of isocyanate groups in the reaction mass, calculated as -N=C=O, molar mass 42.02 g/mol, of 13.4 % was reached. The reaction mass was then cooled to 90 °C, and 42.5 g of diethylene glycol were added. The temperature was then raised again to 130 °C, and stirring was continued for two more hours until the desired mass fraction of isocyanate groups of 9.4 % in the reaction mass was reached. The reaction mass was then cooled to 75 °C, and 191.7 g of methylethyl ketoxime were added at this temperature within sixty minutes, under cooling to keep the temperature below 90 °C. The temperature was then adjusted to 80 °C, and the mixture was stirred for six hours. The reaction mass was then diluted by addition of 503.2 g of methoxypropanol.

### Example 7 - Curing agent 5

In a separate step, an adduct was made of 84.2 g of diethanolamine and 81.8 g of propylene carbonate by reacting at 120 °C for three hours.
750 g of MDI were charged under exclusion of humidity into a resin kettle and heated to 45 °C. At this temperature, a mixture of 469 g of hydroxyethyl methacrylate, 1.5 g of hydroquinone, and 3.0 g of butyl-hydroxytoluene ("BHT", 2,6-di-tert.-butyl-4-methylphenol) were slowly added to keep the temperature below 80 °C. When the addition was completed, the mass fraction of isocyanate groups, calculated as -N=C=O, molar mass 42.02 g/mol, was 8.1 %. The reaction mixture was then cooled to 70 °C, and 166 g of the adduct made in the first step were added which caused a slight rise of temperature. Cooling was applied to keep the temperature at 85 °C. The reaction was continued at that temperature for five hours. Then, 2.5 g of hydroquinone, 2.5 g of 2,6-di-tert.-butyl-4-methylphenol ("BHT"), 326.8 g of 2,2,4-trimethyl-1,3-pentanediol monoisobutyrate (®Texanol, Eastman Chemical Co.) and 99 g of methoxypropanol were added, and the mixture was homogenised for one hour at 70 °C.

### Example 8 - Curing agent 6

In a separate step, 105 g of diethanolamine and 102 g of propylene carbonate were reacted to form an adduct at 120 °C for three hours.

As in Example 7, 687.5 g of MDI were charged under exclusion of humidity into a resin kettle. At 25 °C, 445.5 g of diethylene glycol monobutylether were slowly added under gentle cooling, keeping the temperature at a maximum of 40 °C. The mass fraction of isocyanate groups, calculated as -N=C=O, molar mass 42.02 g/mol, was 9.9 %. At a temperature of 40 °C, 207 g of the adduct made in the first step were added together with 0.4 g of dibutyltin dilaurate. Due to the exothermic reaction, the temperature rose to 80 °C which was kept as upper limit by cooling. Reaction was continued under stirring for three hours at that temperature. 5 g of ethanol and 61.8 g of methoxypropanol were then added at 80 °C, and stirring was continued for one further hour. 60 g of water were then added, and the mixture was homogenised while lowering the temperature to ambient (23 °C).

### Example 9 - Curing Agent 7

Under exclusion of humidity, 105 g of methylethylketoxime and 0.1 g of dibutyltin dilaurate were charged into a resin kettle and heated to 90 °C. At this temperature, 229.5 g of a trimeric 1,6-diisocyanatohexane (®Desmodur N 3300, Bayer) were slowly added under exothermic reaction. The temperature was kept at a maximum of 100 °C by cooling. When the addition of the isocyanate was complete, 10.2 g of butyl acetate were added, and the mixture was stirred until the isocyanate was completely consumed.

### Example 10 - Grinding Resin

258 g of 2-ethylhexylamine were charged into a resin kettle equipped with a stirrer, a thermometer, and distillation facilities, and heated to 80 °C. At this temperature, 380 g of an epoxy resin made from polypropylene glycol and epichlorohydrin, having a specific content of epoxide groups of 5.26 mol/kg, were added evenly over one hour with the temperature rising to 120 °C. The reaction was continued at 120 °C. for one further hour. Next, 1175 g of 2-butoxyethanol were added, and the temperature was lowered to 70 °C. whereupon 1900 g of an epoxy resin based on bisphenol A and epichlorohydrin having a specific content of epoxide groups of 2.11 mol/kg were added. The mixture was heated to 120 °C and left to react for ninety minutes. The intermediate thus obtained has a mass fraction of polyoxyalkylene units (-CH(CH₃)-CH₂-O-) of 11 %, and a mass fraction of alkyl groups having more than three carbon atoms, of 9 %.

This intermediate was brought to a temperature of 100 °C, and 204 g of 3-(N,N-dimethyl)aminopropylamine-1 were added, the mixture was reacted at 100 °C. for one hour. 314 g of 2-butoxyethanol were added, together with 66 g of paraformaldehyde having a mass fraction of formaldehyde of 91 %. The temperature was raised to 140 °C, and 36 g of water formed in the reaction were distilled off azeotropically using methyl isobutylketone as carrier. When the water was separated, the ketone was removed by distillation under reduced pressure, and the remainder was diluted to a mass fraction of solids of 55 % by adding 774 g of 2-butoxyethanol.

### Example 11 - Emulsion 1-1

5934 g of the resin solution of Example 2 were charged to a reaction vessel, and heated to 120 °C. under stirring. 1477 g of methoxypropanol were distilled off at that temperature under reduced pressure. Then, the remaining liquid was cooled to 95 °C, and 224 g of deionised water were added, thus lowering the temperature to 80 °C. 3195 g of the curing agent 1 of Example 4 were then added, and the mixture was homogenised at 80 °C for one hour.

In a separate step, an acidic catalyst solution was prepared by completely dissolving 106.9 g of bismuth trioxide in 271.8 g of an aqueous solution of methane sulphonic acid with a mass fraction of solute of 70 %, and diluting after complete dissolution by adding 7215 g of deionised water. The homogenised mixture of resin and curing agent was then added to this catalyst solution within thirty minutes under thorough stirring, whereby the mixture assumed a temperature of 40 °C. The mixture was stirred for two more hours at this temperature, and then diluted by addition of 2091 g of deionised water to a mass fraction of solids of 37 %.

### Example 12 - Emulsion E1-2

5934 g of the resin solution of Example 2 were charged to a reaction vessel, and heated to 120 °C under stirring. 1477 g of methoxypropanol were distilled off at that temperature under reduced pressure. Then, the remaining liquid was cooled to 95 °C, and 224 g of deionised water were added, thus lowering the temperature to 80 °C. 3195 g of the curing agent 1 of Example 4 were then added, and the mixture was homogenised at 80 °C for one hour.

In a separate step, an acidic catalyst solution was prepared by completely dissolving 72.4 g of bismuth trioxide in 271.8 g of an aqueous solution of methane sulphonic acid with a mass fraction of solute of 70 %, and diluting after complete dissolution by adding 7215 g of deionised water. The homogenised mixture of resin and curing agent was then added to this catalyst solution within thirty minutes under thorough stirring, whereby the mixture assumed a temperature of 40 °C. The mixture was stirred for two more hours at this temperature, and then diluted by addition of 2032 g of deionised water to a mass fraction of solids of 37 %.

### Example 13 - Emulsion 1-3

5934 g of the resin solution of Example 2 were charged to a reaction vessel, and heated to 120 °C under stirring. 1477 g of methoxypropanol were distilled off at that temperature under reduced pressure. Then, the remaining liquid was cooled to 95 °C, and 224 g of deionised water were added, thus lowering the temperature to 80 °C. 3195 g of the curing agent 1 of Example 4 were then added, and the mixture was homogenised at 80 °C for one hour.

In a separate step, an acidic catalyst solution was prepared by completely dissolving 36.2 g of bismuth trioxide in 271.8 g of an aqueous solution of methane sulphonic acid with a mass fraction of solute of 70 %, and diluting after complete dissolution by adding 7215 g of deionised water. The homogenised mixture of resin and curing agent was then added to this catalyst solution within thirty minutes under thorough stirring, whereby the mixture assumed a temperature of 40 °C. The mixture was stirred for two more hours at this temperature, and then diluted by addition of 1971 g of deionised water to a mass fraction of solids of 37 %.

### Example 14 - Emulsion 2

5822 g of the resin solution of Example 1 were charged to a reaction vessel, and heated to 120 °C under stirring. 1426 g of methoxypropanol were distilled off at that temperature under reduced pressure. Then, the remaining liquid was cooled to 95 °C, and 224 g of deionised water were added, thus lowering the temperature to 80 °C. 3144 g of the curing agent of Example 5 were then added, and the mixture was homogenised at 80 °C for one hour.

In a separate step, an acidic catalyst solution was prepared by dissolving 70.6 g of bismuth trioxide in 279.1 g of an aqueous solution of methane sulphonic acid with a mass fraction of solute of 70 %, and diluting after complete dissolution by adding 7607 g of deionised water. The homogenised mixture of resin and curing agent was then added to this catalyst solution within thirty minutes under thorough stirring, whereby the mixture assumed a temperature of 40 °C. The mixture was stirred for two more hours at this temperature, and then diluted by addition of 1677 g of deionised water to a mass fraction of solids of 37 %.

### Example 15 - Emulsion 3

5822 g of the resin solution of Example 1 were charged to a reaction vessel, and heated to 120 °C. under stirring. 1426 g of methoxypropanol were distilled off at that temperature under reduced pressure. Then, the remaining liquid was cooled to 95 °C, and 218 g of deionised water were added, thus lowering the temperature to 80 °C. 2873.6 g of the curing agent of Example 7 were then added, and the mixture was homogenised at 80 °C. for one hour.

In a separate step, an acidic catalyst solution was prepared by dissolving 70.6 g of bismuth trioxide in 296.5 g of an aqueous solution of methane sulphonic acid with a mass fraction of solute of 70 %, and diluting after complete dissolution by adding 7658 g of deionised water. The homogenised mixture of resin and curing agent was then added to this catalyst solution within thirty minutes under thorough stirring, whereby the mixture assumed a temperature of 40 °C. The mixture was stirred for two more hours at this temperature, and then diluted by addition of 1676 g of deionised water to a mass fraction of solids of 37 %.

### Example 16 - Emulsion 4

5822 g of the resin solution of Example 1 were charged to a reaction vessel, and heated to 120 °C under stirring. 1426 g of methoxypropanol were distilled off at that temperature under reduced pressure. Then, the remaining liquid was cooled to 95 °C, and 129 g of deionised water were added, thus lowering the temperature to 80 °C. 3144.6 g of the curing agent of Example 6 were then added, and the mixture was homogenised at 80 °C for one hour.

In a separate step, an acidic catalyst solution was prepared by dissolving 70.6 g of bismuth trioxide in 279.1 g of an aqueous solution of methane sulphonic acid with a mass fraction of solute of 70 %, and diluting after complete dissolution by adding 7123 g of deionised water. The homogenised mixture of resin and curing agent was then added to this catalyst solution within thirty minutes under thorough stirring. The mixture was stirred for one more hour, and then diluted by addition of 2046 g of deionised water to a mass fraction of solids of 37%.

### Example 17 - Emulsion 5

5822 g of the resin solution of Example 1 were charged to a reaction vessel, and heated to 120 °C. under stirring. 1426 g of methoxypropanol were distilled off at that temperature under reduced pressure. Then, the remaining liquid was cooled to 95 °C, and 218 g of deionised water were added, thus lowering the temperature to 80 °C. 3144.6 g of the curing agent of Example 4 were then added, and the mixture was homogenised at 80 °C. for one hour.

In a separate step, an acidic solution was prepared by dissolving 296.5 g of an aqueous solution of methane sulphonic acid with a mass fraction of solute of 70 % in 7284 g of deionised water. The homogenised mixture of resin and curing agent was then added to this acidic solution within thirty minutes under thorough stirring. The mixture assumed a temperature of 40 °C. It was stirred at that temperature for two more hours, and then diluted by addition of 1658 g of deionised water to a mass fraction of solids of 37 %.

### Example 18 - Emulsion 6

3312 g of the resin solution of Example 3 were charged to a reaction vessel, and heated to 120 °C under stirring. 463 g of methoxypropanol were distilled off at that temperature under reduced pressure. Then, the remaining liquid was cooled to 95 °C, and 126 g of deionised water were added, thus lowering the temperature to 80 °C. 1561 g of the curing agent of Example 8 were then added, and the mixture was homogenised at 80 °C for one hour.

In a separate step, an acidic catalyst solution was prepared by dissolving 69.7 g of bismuth trioxide in 193.3 g of an aqueous solution of methane sulphonic acid with a mass fraction of solute of 70 %, and diluting after complete dissolution by adding 5565 g of deionised water. The homogenised mixture of resin and curing agent was then added to this catalyst solution within thirty minutes under thorough stirring. The mixture was stirred for one more hour, and then diluted by addition of 840 g of deionised water to a mass fraction of solids of 37 %.

### Example 19 - Emulsion 7-1

5822 g of the resin solution of Example 1 were charged to a reaction vessel, and heated to 120 °C under stirring. 1426 g of methoxypropanol were distilled off at that temperature under reduced pressure. Then, the remaining liquid was cooled to 95 °C, and 117 g of deionised water were added, thus lowering the temperature to 80 °C. 2269.3 g of the curing agent of Example 9 were then added, and the mixture was homogenised at 80 °C. for one hour.

In a separate step, an acidic solution was prepared by dissolving 258.8 g of an aqueous solution of methane sulphonic acid with a mass fraction of solute of 70 % in 7933 g of deionised water. The homogenised mixture of resin and curing agent was then added to this acidic solution within thirty minutes under thorough stirring, whereby the mixture assumed a temperature of 40 °C. The mixture was stirred for two more hours at this temperature, and then diluted by addition of 2024 g of deionised water to a mass fraction of solids of 37 %.

### Example 20 - Emulsion 7-2

5822 g of the resin solution of Example 1 were charged to a reaction vessel, and heated to 120 °C under stirring. 1426 g of methoxypropanol were distilled off at that temperature under reduced pressure. Then, the remaining liquid was cooled to 95 °C, and 117 g of deionised water were added, thus lowering the temperature to 80 °C. 2269.3 g of the curing agent of Example 9 were then added, and the mixture was homogenised at 80 °C for one hour.

In a separate step, an acidic catalyst solution was prepared by dissolving 107 g of bismuth trioxide in 263.2 g of an aqueous solution of methane sulphonic acid with a mass fraction of solute of 70 %, and diluting after complete dissolution by adding 8077 g of deionised water. The homogenised mixture of resin and curing agent was then added to this catalyst solution within thirty minutes under thorough stirring, whereby the mixture assumed a temperature of 40 °C. The mixture was stirred for two more hours at this temperature, and then diluted by addition of 2058 g of deionised water to a mass fraction of solids of 37 %.

### Example 21 - Emulsion 8

5822 g of the resin solution of Example 1 were charged to a reaction vessel, and heated to 120 °C under stirring. 1426 g of methoxypropanol were distilled off at that temperature under reduced pressure. Then, the remaining liquid was cooled to 95 °C, and 107 g of deionised water were added, thus lowering the temperature to 80 °C. 2408 g of the curing agent of Example 8 were then added, and the mixture was homogenised at 80 °C. for one hour.

In a separate step, an acidic catalyst solution was prepared by dissolving 107 g of bismuth trioxide in 298.3 g of an aqueous solution of methane sulphonic acid with a mass fraction of solute of 70 %, and diluting after complete dissolution by adding 7913 g of deionised water. The homogenised mixture of resin and curing agent was then added to this catalyst solution within thirty minutes under thorough stirring, whereby the mixture assumed a temperature of 40 °C. The mixture was stirred for two more hours at this temperature, and then diluted by addition of 2058 g of deionised water to a mass fraction of solids of 37 %.

### Example 22 Pigment Paste PP1

The following materials were added to a mixing vessel in the order shown: 207.9 g of deionised water, 16.9 g of aqueous acetic acid (30 g of acetic acid in 100 g of the aqueously diluted solution), 18.7 g of 2-butoxyethanol, 268 g of the grinding resin solution of example 10.2 g of a 50 % strength solution of 2,4,7,9-tetramethyl-5-decyne-4,6-diol in 2-butoxyethanol (®Surfynol 104 BC, Air Products Nederland B. V.), 7.3 g of a carbon black pigment (®Printex 201, Evonik Industries), and 479.2 g of a titanium dioxide white pigment (®Kronos RN 59, Kronos Titan GmbH). The mixture was dispersed in a dissolver for fifteen minutes, and then ground in a ball mill for one hour.

### Example 23 Pigment Paste PP2

The following materials were added to a mixing vessel in the order shown: 640.8 g of the grinding resin solution of example 10, 44.9 g of 2-butoxyethanol, 224.3 g of dibutyl tin oxide, three portions of 30 g each of a 30 % strength aqueous solution of acetic acid. The mixture was dispersed in a dissolver for fifteen minutes, and then ground in a ball mill for two hours.

### Example 24 Preparation of CED Coating Compositions

CED coating compositions were prepared from the emulsions of examples 11 to 21 (E1-1 to E8), the pigment pastes PP1 and PP2 of examples 22 and 23, and water, according to the following recipes:

**Table 1 CED Paint Formulations (masses of constituents in g)**

| CED Paint No. | Emulsion | | deionised water mass in g | Pigment Paste 1 mass in g | Pigment Paste 2 mass in g |
|---|---|---|---|---|---|
| | of Example | mass in g | | | |
| L1 | 11 | 3392 | 5982 | 626 | |
| L2 | 12 | 3392 | 5982 | 626 | |
| L3 | 13 | 3392 | 5982 | 626 | |
| L4 | 14 | 3392 | 5982 | 626 | |
| L5 | 15 | 3392 | 5982 | 626 | |
| L6 | 16 | 3392 | 5982 | 626 | |
| L7 | 17 | 3125 | 6073 | 626 | 176 |
| L8 | 18 | 3392 | 5982 | 626 | |
| L9 | 19 | 3392 | 5982 | 626 | |
| L10 | 20 | 3392 | 5982 | 626 | |
| L11 | 21 | 3392 | 5982 | 626 | |

The ingredients for each of the CED paints were mixed in the order shown, starting with the second column from the left, and continuing to the right in the appropriate row. The emulsion is charged in each case, and water and the pigment paste(s) are then added in sequence under stirring.

### Example 25 Preparation of Primer/Surfacer Coating Compositions

The primer/surfacer coating compositions used were prepared from a grey pigment paste 25a that was completed by addition of a modified polyester binder 25b and an aminoplast crosslinker.

### Example 25aa - acid functional polyurethane

In a first reaction, an acid functional polyurethane 25aa was prepared by charging in a resin kettle a mixture of 810 g of dimethylol propionic acid in a mixture of 946 g of diethylene glycol dimethyl ether and 526 g of methyl isobutyl ketone and heating this mixture to 100 °C until complete dissolution. At this temperature, a mixture of 870 g of toluylene diisocyanate ("TDI") and 528 g of a semicapped TDI which is a reaction product of one mol of TDI with one mol of ethyleneglycol monoethylether was added over four hours while keeping the temperature constant at 100 °C. The reaction mixture was stirred at this temperature for one hour in order to complete consumption of all isocyanate groups. The mass fraction of solids was 60 %. This acid functional polyurethane 25aa had an acid number of 140 mg/g and a Staudinger-Index of 9.3 cm³/g, measured on solutions in N,N-dimethylformamide (DMF) at 20 °C.

The semi-capped TDI was prepared separately by addition of 300 g of ethylene glycol monoethylether to 580 g of TDI within two hours at 30 °C and subsequent reaction for two more hours when a final mass fraction of isocyanate groups in the adduct of 16.5 % was found.

### Example 25ab - hydroxy-functional polyester

In a separate step, a hydroxy-functional polyester 25ab was prepared by charging 190 g of tripropylene glycol, 625 g of neopentyl glycol, 140 g of isomerised linoleic acid, 415 g of isophthalic acid, and 290 g of trimellitic acid anhydride were esterified at 230 °C until the acid number of the reaction mixture had decreased to 4 mg/g. The efflux time of a 50 % strength solution in 2-n-butoxyethanol of the resin formed, measured according to DIN 53211 at 20 °C, was 165 s. The value of the Staudinger index of the hydroxyfunctional polyester 25ab, as measured in N,N-dimethylformamide at 20 °C, was 10.5 cm³/g.

### Example 25ac - condensation product 25ac of the acid functional polyurethane 25aa and the hydroxy-functional polyester 25ab

300 g of the acid functional polyurethane 25aa and 700 g of the hydroxy-functional polyester 25ab were charged to a reaction vessel equipped with stirrer, thermometer, nitrogen inlet, and distillation apparatus, mixed and heated under stirring to 155 °C. The solvents were removed under a nitrogen blanket by distillation under reduced pressure to maintain a steady flow of separated solvent in the condenser. The progress of the reaction was monitored by drawing samples and analysing for acid number and viscosity. The reaction was stopped when an acid number of 36 mg/g and a Staudinger index of 16.2 cm³/g had been reached, and the condensation product remaining was cooled to ambient temperature and discharged. The condensation product referred to as 25ac was fully dilutable in water after neutralisation with dimethylethanolamine, with no sedimentation or phase separation.

### Example 25ad - modified polyester

A resin kettle equipped with stirrer and reflux condenser was charged with 192 g of tripropylene glycol and 104 g of neopentyl glycol, the charge was heated under stirring to 110 °C. 192 g of trimellithic anhydride were the added, and the mixture was heated within two hours to 170 °C. The reaction mixture was held at that temperature until the acid number was 87 mg/g. After cooling to 150 °C, 40 g of a commercial mixture of glycidyl esters of alpha-branched decanoic acids (®Cardura E 10, Hexion Specialty Chemicals, Inc.) and 14 g of linseed oil fatty acid were added. This mixture was then heated to 180 °C within one hour, and held at that temperature until an acid number of 55 mg/g was reached. The reaction mixture was then cooled and diluted by addition of methoxypropanol to a mass fraction of solids of 70 %. To 100 g of this solution, 7 g of dimethyl ethanolamine, and 68 g of deionised water were added and homogenised with a mechanical stirrer for fifteen minutes at 600 min⁻¹. An aqueous dispersion with a mass fraction of solids of 40 % was obtained.

### Example 25b - Preparation of the Pigmented Primer-Surfacer Coating Composition

A pigmented primer/surfacer coating composition was prepared according to the following recipe: 21.10 g of the condensation product of example 25ac which had been adjusted to a mass fraction of solids of 42 % by addition of deionised water was charged, in the sequence stated, 3.35 g of deionised water, 12.65 g of a rutil-type titanium dioxide pigment (surface treated with Al and Zr compounds, ®Kronos 2190, Kronos Titan GmbH), 12.65 g of precipitated barium sulphate pigment (Blanc fixe F, Sachtleben GmbH), and 0.05 g of carbon black (®Printex U, Evonik Carbon Black GmbH) were added to this charge, and then homogenised with a mechanical stirrer at 1200 min⁻¹ for fifteen minutes. This pre-blend was transferred to a bead mill and ground at a temperature not exceeding 50 °C. After a milling time of forty-five minutes, the required particle size of 10 µm was achieved, grinding was stopped and the paste referred to as 25ba thus formed was separated from the beads.

A mixture 25bb was prepared by charging 9.00 g of the condensation product of example 25ac which had been adjusted to a mass fraction of solids of 42 % by addition of deionised water, adding in this sequence, 27.20 of the aqueous dispersion of example 25ad, 1.75 g of a highly methoxymethylated melamine crosslinker having a molar ratio of methoxy groups to methylene groups to melamine derived moieties of from 5.0 mol : 5.8 mol : 1 mol (Cymel® 303, Cytec Industries Inc.), and 12 g of deionised water.

This mixture 25bb was added to the paste 25ba at ambient temperature (23 °C) and homogenised with a mechanical stirrer at 1200 min⁻¹ for fifteen minutes to obtain the pigmented primer-surfacer coating composition 25b. Dynamic viscosity of this coating composition 25b was 300 mPa·s (measured in accordance with DIN EN ISO 3219, at 23 °C, and a shear rate of 25 s⁻¹), and its pH value was 8.0 (measured in accordance with DIN ISO 976, at 23 °C, on a paint diluted by addition of deionised water having a mass fraction of solids of 10 %).

### Example 26 Preparation of Topcoat Compositions

### Example 26a - Preparation of the modified polyester binder resin

145 g of isononanoic acid (3,5,5-trimethylhexanoic acid), 22 g of glycerol, 88 g of pentaerythritol, 15 g of adipic acid, 3 g of maleic anhydride and 98 g of phthalic anhydride were charged together into a reactor and heated under nitrogen purge to 150 °C. After a holding period of thirty minutes at this temperature the content of the reactor was further heated to 215 °C. within three hours. At this temperature the mixture was kept under esterification conditions at a constant temperature of 215 °C under removal of 32 g of water by azeotropic distillation with xylene until an acid number of 10 mg/g and a Staudinger index of 9.3 cm³/g was reached. The reaction was then stopped by adding 0.07 g of water to the closed reactor under pressure and by cooling down to 160 °C. The reaction product was then diluted by addition of 210 g of Solvent Naphtha (a light aromatic fraction with a boiling range of from 150 °C to 180 °C. After cooling down the mass fraction of solids was adjusted to 60 %. The dynamic viscosity of the diluted sample was 520 mPa·s (measured at 23°C, and a shear rate of 25 s⁻¹ on a 50 % strength solution in Solvent Naphtha).

### Example 26b - Preparation of a Pigmented Paste

434.0 g of the polyester solution of Example 26a, 55.0 g of Solvent Naphtha, 10.5 g of n-butanol, 10.5 g of a titanium dioxide pigment (surface treated with Al, Si, and Zr compounds, ®Kronos 2310, Kronos Titan GmbH), 52.0 g of Pigment Orange 36 (®Novoperm Orange HL 70, Benzimidazolone based, oil absorption according to DIN EN ISO 787, part 5: 64 g/100 g, average size of primary particles: 395 nm; Clariant SE), 31.5 g of Pigment Violet 19 (®Hostapermrot E2B 70, quinacridone based pigment, oil absorption according to DIN EN ISO 787, part 5: 85 g/100 g, average size of primary particles: 220 nm; Clariant SE), and 6.0 g of a brown iron oxide pigment (®Bayferrox 130 BM, micronised synthetic iron oxide, CAS- Nr: 1309-37-1, oil absorption according to DIN EN ISO 787, part 5: 26 g/100 g, average size of primary particles: 220 nm; Lanxess AG) were blended in the order shown and homogenised with a mechanical stirrer at 1200 min⁻¹ for fifteen minutes. The mixture was then transferred to a bead mill and ground at a temperature not exceeding 50 °C. After eighty minutes, the required average particle size of 7 µm was achieved, grinding is stopped and the paste separated from the beads.

### Example 26c - Preparation of a pigmented coating composition

The paste from example 26b was completed with an additional 66.5 g of the polyester solution of Example 26a, 167.0 g of a melamine-formaldehyde crosslinker resin which is partially etherified with isobutanol (mass fraction of solids 60 %, molar mass 4000 g/mol, molar ratio of melamine, formaldehyde and iso-butanol: 1 mol : 4.9 mol : 2.6 mol; CYMEL® MI-12-1, Cytec Industries Inc.), 17.5 g of 1-nonanol, 111.0 g of Solvent Naphtha, 31.0 g of xylene, and 7.5 g of n-butanol which were added in the sequence stated to the paste at ambient temperature and homogenised with a mechanical stirrer at 1200 min⁻¹ for fifteen minutes. The resulting paint had a dynamic viscosity of 650 mPa·s (DIN EN ISO 3219, measured at 23 °C and a shear rate of 25 s⁻¹). For spraying, the viscosity of the paint was adjusted to 300 mPa·s by adding 177 g of a solvent blend of Solvent Naphtha, xylene, and n-butanol in a mass ratio of 75 : 20 : 5.

### Example 27 - Multilayer Coatings

A multilayer coating was prepared from the CED paints L1 through L11 of example 24, the primer-surfacer coating composition of example 25b, and the topcoat composition of example 26c, according to the following recipe:

### Preparation of the test panels:

Zinc-phosphated steel panels (Gardobond 26S 6800 OC from Chemetall) were coated with the CED paints according to examples L1 to L11 (as described in Table 1) under following conditions:

| | |
|---|---|
| temperature of CED-bath | 30 °C, |
| deposition time: | 2 min |
| voltage | 300 V |

For each CED paint L1 to L11, two panels each (P1, P1a; P2, P2a; ... ;P11, P11a) were coated with the same CED paint. All coated panels (CED dry film thickness: 20 µm) were allowed to flash off at ambient temperature for thirty minutes.

One panel (P1; P2; ... P11) for each of the different CED paints L1; L2; ... ; L11 was then coated after flash-off with the same waterborne primer-surfacer of example 25b, and then stoved for twenty minutes at 165 °C. The dry film thickness of the primer-surfacer layer was 30 µm.

The reference panels P1a; P2a; ... P11a which had been coated also with CED paints L1 through L11 were also coated with the primer-surfacer coating composition, but with an additional stoving step for twenty minutes at 165 °C after applying the CED coating and flashing off, before applying the primer-surfacer coating composition. This reflects the traditional three-coat three-bake technology. Dry film thicknesses were also determined on these panels, for the CED layer, 20 µm, and for the primer-surfacer layer, 30 µm.

After cooling, all panels (P1, P1a; P2, P2a; ... P11, P11a) were coated with a third coating layer using overcoated with the solventborne stoving topcoat of example 26c (dry film thickness of the topcoat layer for all panels: 45 µm). The panels with the topcoat layers were stoved for twenty minutes at 140 °C.

The following scheme details the sequence of steps:

**Table 2 Preparation of Test Panels**

| Panel | CED Paint | Stoving | Primer-Surfacer | Stoving | Topcoat | Stoving |
|---|---|---|---|---|---|---|
| P1 | L1 | no | 25b | 160 °C; 20 min | 26c | 140 °C; 20 min |
| P1a | | 160 °C; 20 min | 25b | 160 °C; 20 min | 26c | 140 °C; 20 min |
| P2 | L2 | no | 25b | 160 °C; 20 min | 26c | 140 °C; 20 min |
| P2a | | 160 °C; 20 min | 25b | 160 °C; 20 min | 26c | 140 °C; 20 min |
| P3 | L3 | no | 25b | 160 °C; 20 min | 26c | 140 °C; 20 min |
| P3a | | 160 °C; 20 min | 25b | 160 °C; 20 min | 26c | 140 °C; 20 min |
| P4 | L4 | no | 25b | 160 °C; 20 min | 26c | 140 °C; 20 min |
| P4a | | 160 °C; 20 min | 25b | 160 °C; 20 min | 26c | 140 °C; 20 min |
| P5 | L5 | no | 25b | 160 °C; 20 min | 26c | 140 °C; 20 min |
| P5a | | 160 °C; 20 min | 25b | 160 °C; 20 min | 26c | 140 °C; 20 min |
| P6 | L5 | no | 25b | 160 °C; 20 min | 26c | 140 °C; 20 min |
| P6a | | 160 °C; 20 min | 25b | 160 °C; 20 min | 26c | 140 °C; 20 min |
| P7 | L7 | no | 25b | 160 °C; 20 min | 26c | 140 °C; 20 min |
| P7a | | 160 °C; 20 min | 25b | 160 °C; 20 min | 26c | 140 °C; 20 min |
| P8 | L8 | no | 25b | 160 °C; 20 min | 26c | 140 °C; 20 min |
| P8a | | 160 °C; 20 min | 25b | 160 °C; 20 min | 26c | 140 °C; 20 min |
| P9 | L9 | no | 25b | 160 °C; 20 min | 26c | 140 °C; 20 min |
| P9a | | 160 °C; 20 min | 25b | 160 °C; 20 min | 26c | 140 °C; 20 min |
| P10 | L10 | no | 25b | 160 °C; 20 min | 26c | 140 °C; 20 min |
| P10a | | 160 °C; 20 min | 25b | 160 °C; 20 min | 26c | 140 °C; 20 min |
| P11 | L11 | no | 25b | 160 °C; 20 min | 26c | 140 °C; 20 min |
| P11a | | 160 °C; 20 min | 25b | 160 °C; 20 min | 26c | 140 °C; 20 min |

One half of the area of these panels was exposed to a stone chip test according to DIN EN ISO 20567-1 (2 x 500 g of chips, transported with an air pressure of 0.2 MPa = 2 bar), and on the second half, a heavy, linear scratch down to the steel substrate was applied. Panels prepared in this way were exposed to a cyclic corrosion as described infra, for sixty days. Test results are shown in Table 3.

### Cyclic Corrosion Testing

The following equipment was used: a cyclic climatisation test chamber (Weiss Technik, type SC/KWT 1000), and a multi-grit stone chip test module (Erichsen, model 508, according to DIN EN ISO 20567-1)

Coated steel sheets (®Gardobond 26S/6800/OC, 105 mm × 190 mm) were subjected to stone chip according to method B of DIN EN ISO 20567-1. These sheets were then subjected to the cyclic corrosion test, comprising four hours of salt spray according to DIN 50 021, using an aqueous sodium chloride solution with a mass fraction of salt of 5 %, at 35 °C, then four hours of standard conditions (23 °C, 50 % relative humidity, according to DIN 50 014), and finally, sixteen hours of condensation atmosphere with constant humidity (40 °C, 100 % of relative humidity, according to DIN 50 014), for a total of 60 such cycles. For this cycle test, the coated sheets were put in an angle of 75° with regard to the horizontal plane. After the test, the sheets were freed from adhering corrosion products, rinsed with cold water, and dried. The coated sheet was then tightly covered with adhesive tape which was then removed with a jerk, taking with it loosely hanging pieces of the coating film.

Evaluation was done according to the following criteria: A damage is detected if the coating film has been loosened from the substrate by corrosion. Scratches or markings caused by the grits or by cleaning after the test are not taken into account. Evaluation is made by visual inspection and comparison to the pictures in figure 3 of the multi-chip standard DIN EN ISO 20567-1. Depending on the degree of damage, a value of from 0 to 5.0, in steps of 0.5, is assigned. "0" stands for "no damage". The following rating applies:

| Rating | ratio of damaged area to total area, in % | Rating | ratio of damaged area to total area, in % |
|---|---|---|---|
| 0.5 | 0.2 | 3 | 19.2 |
| 1 | 1 | 3.5 | 29 |
| 1.5 | 2.5 | 4 | 43.8 |
| 2 | 5.5 | 4.5 | 58.3 |
| 2.5 | 10.7 | 5 | 81.3 |

**Table 3 Test Results**

| Panel | Pendulum Hardness in s | Stone Chip Test Rating | Cyclic Corrosion Test Rating |
|---|---|---|---|
| P1 | 154 | 1 .. 2 | 2 |
| P1a | 160 | 1 .. 2 | 2 |
| P2 | 150 | 1 .. 2 | 2 .. 3 |
| P2a | 150 | 1 .. 2 | 2 |
| P3 | 141 | 2 .. 3 | 3 .. 4 |
| P3a | 150 | 2 | 3 |
| P4 | 155 | 1 .. 2 | 2 |
| P4a | 164 | 1 .. 2 | 2 |
| P5 | 160 | 2 | 2 |
| P5a | 162 | 2 | 2 |
| P6 | 144 | 3 | 3 .. 4 |
| P6a | 168 | 2 | 2 |
| P7 | 148 | 2 .. 3 | 2 |
| P7a | 170 | 2 | 2 |
| P8 | 150 | 5 | 5 |
| P8a | 168 | 2 | 2 |
| P9 | 157 | 2 | 5 |
| P9a | 161 | 2 | 4..5 |
| P10 | 160 | 2 | 5 |
| P10a | 165 | 2 | 4 .. 5 |
| P11 | 161 | 4 .. 5 | 5 |
| P11a | 172 | 2 | 2 |

Test results obtained with isocyanates capped with glycol monoethers or aliphatic oximes (cf. panels P8, P9, P10 and P11 in the wet-on-wet application) do not perform satisfactorily in the cyclic corrosion test, while unexpectedly, with the capped isocyanates where the capping agents according to the invention have been selected, there is little or no difference between the wet-on-wet application and a three-coat, three bake stoving method, both in the hardness, stone chip, and cyclic corrosion test results. This finding could not have been expected from the prior art.

## Claims

**1.** A process for the preparation of a multi-layer coating film on an electrically conductive substrate, comprising the steps of
- electrodepositing on an electrically conductive substrate, of cationically charged resin particles from a first coating composition **C1** in the form of an aqueous dispersion comprising a resinous binder **A** having functional groups selected from the group consisting of hydroxyl groups, amino groups, mercaptane groups, and phosphine groups, a curing agent **B**, and a catalyst **D,** to form an uncured electrodeposition coating film **E**,
- applying an aqueous primer-surfacer coating composition **C2** comprising a coating binder **F** and a curing agent **G** onto the electrodeposition coating film **E** to form an uncured intermediate coating film **H**, and then
- simultaneously heating the substrate coated with coating films **E** and **H** and curing both the uncured electrodeposition coating film and the uncured intermediate coating film to form a cured film **I**, **characterised in that** the curing agent **B** comprises a reaction product of an aliphatic, aromatic, or mixed aromatic-aliphatic multifunctional isocyanate compound **B1** having an average of at least two isocyanate groups per molecule, and of a capping agent **B2** selected from the group consisting of
- aliphatic linear or branched diols of the formula I 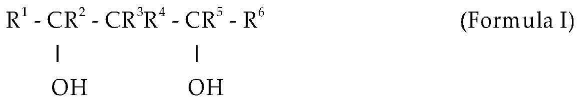 where R¹, R², R³, R⁴, R⁵, and R⁶ are each independently is selected from the group consisting of hydrogen, linear or branched alkyl groups having from one to six carbon atoms, and where R³ and R⁴ may also independently selected from the group consisting of alkoxy groups having from one to six carbon atoms,
- aliphatic linear or branched diols of formula II having two primary hydroxyl groups or one primary and one secondary hydroxyl groups, and from two to ten carbon atoms,
HO -(CR⁷R⁸ - CR⁹R¹⁰ - O)ₙ - H (Formula II)
where n can be 1, 2, 3, or 4, and where R⁷, R⁸, R⁹, and R¹⁰ are each independently is selected from the group consisting of hydrogen, linear or branched alkyl groups having from one to six carbon atoms, and of alkoxy groups having from one to six carbon atoms,
- hydroxyalkyl(meth)acrylates of formula III
CH₂ = CR" - CO - O - R¹²- OH (Formula III)
where R¹¹ is selected from the group consisting of hydrogen, and methyl, and R¹² is an alkylene group selected from the group consisting of 1,2-ethane-diyl, 1,2-propane-diyl, 1,3-propane-diyl, and 1,4-butane-diyl, and
- >NH functional heterocyclic aliphatic or aromatic compounds having from four to twelve carbon atoms, where the ring carbon atoms may additionally be substituted with alkyl groups having from one to four carbon atoms.

**2.** The process of claim 1, further comprising
- applying a pigmented coating composition **C3** onto the cured film **I** to form an uncured pigmented film **J**, and
- eventually heating the substrate covered with the cured film **I** and the uncured pigmented film **J**, and curing the pigmented coating film **J** to form a multilayer film **K**.

**3.** The process of claim 1 wherein curing is effected by heating the substrate covered with the coating films **E** and **H** to a temperature between 120 °C and 190 °C for a period of time between five minutes and sixty minutes.

**4.** The process of claim 2 wherein curing is effected by heating the substrate covered with cured film **I** and the uncured coating film **J** to a temperature of between 110 °C and 185 °C, for a period of time of between five minutes and sixty minutes.

**5.** The process of claim 4 wherein curing is effected by using a lower curing temperature in curing the uncured coating film **J** than for curing the coating films **E** and **H**.

**6.** The process of claim 1 wherein the polymeric binder **A** is selected from the group consisting of aminofunctional (meth)acrylic resins, aminofunctional polyurethane resins, aminofunctional resins derived from polybutadiene, aminofunctional epoxy resins which are reaction products of functional epoxy resins and amines, and aminofunctional polyurethane carbonate resins which are reaction products of cyclocarbonate resins and amines.

**7.** The process of claim 1 wherein the polymeric binder **A** has functional hydroxyl groups.

**8.** The process of claim 1 wherein the polymeric binder **A** has tertiary amino groups.

**9.** The process of claim 1 wherein the polymeric binder **A** contains functional groups that correspond to a specific content of active hydrogen atoms *n*(H) / *m*(A), which is the ratio of the amount of substance *n*(H) of active hydrogen atoms to the mass m(A) of the polymeric binder **A**, of from 0.5 mol/kg to 6 mol/kg.

**10.** The process of claim 1 wherein the polymeric binder **A** is a reaction product of multifunctional epoxide resins and primary amines, secondary amines, tertiary amines and mixtures thereof.

**11.** The process of claim 1 wherein the multifunctional isocyanates **B1** have an average of at least two isocyanate groups per molecule, and are aliphatic, aromatic, or mixed aromatic-aliphatic isocyanates selected from the group consisting of hexamethylene diisocyanate ("HDI"), 1,6-diisocyanato-2,2,4-trimethylhexane, 1,6-diisocyanato-2,4,4-trimethylhexane, isophorone diisocyanate ("IPDI"), the commercially available mixture of isomeric diisocyanato toluene ("TDI"), alpha, alpha, alpha', alpha'-diisocyanato-m-xylene ("TMXDI"), bis-(4-isocyanatophenyl)methane ("MDI"), and bis-(4-isocyanatocyclohexyl)-methane ("HMDI"), trimeric diisocyanatohexane, mixtures of oligomeric bis-(4-isocyanatophenyl)methane, and reaction products of any of the difunctional isocyanates mentioned supra with hydroxyfunctional carbamates which are adducts of cyclic carbonates and at least one aminofunctional compound selected from the group consisting of alkanolamines, dialkanolamines, and aliphatic amines having at least one primary or secondary amino group.

**11.** The process of claim 1 wherein the second coating composition **C2** is a water-borne primer-surfacer coating composition based on binders **F** selected from the group consisting of a fatty acid-modified water-borne polyester **F1**, a polyurethane dispersion **F2**, and of mixtures of these. Particularly preferred are primer-surfacer coating compositions that further comprise condensation products **F12** of acid-functional polyurethane dispersions, and hydroxy-functional waterborne polyesters which are obtainable by heating these constituents under esterification conditions, and on curing agents **G** for the binder **F** which are selected from the group consisting of capped isocyanates, amino resin curing agents which are addition resins made from aldehydes and polyfunctional amines and/or amides which are preferably etherified with linear or branched aliphatic alcohols preferably having from one to four carbon atoms.

**12.** A multilayered cured coating film **I** made by the process of claim 1.

**13.** A multilayered cured coating film **K** made by the process of claim 1.

**14.** A substrate having a coating film **I** according to claim 12.

**15.** A substrate having a coating film **K** according to claim 13.
